# EUROPEAN PATENT APPLICATION

(11) **EP 4 026 634 A1**
(43) Date of publication of application: **13.07.2022**
(21) Application number: 20860581.6
(22) Date of filing: 17.07.2020
(51) Int. Cl.: B22F 3/105, B22F 3/16, B33Y 10/00, B33Y 30/00, B29C 64/153, B29C 64/209, B29C 64/236, B29C 64/245, B29C 64/268

(54) **AM DEVICE**

(30) Priority: 04.09.2019 JP 2019160875
(71) Applicant: Ebara Corporation, Tokyo 144-8510 (JP)
(72) Inventor: SHINOZAKI, Hiroyuki, Tokyo 144-8510 (JP)
(74) Representative: Schmidbauer, Andreas Konrad
(86) International application number: PCT/JP2020/027811
(87) International publication number: WO 2021/044747

(57) **Abstract**

One of the objects of the present application is to provide a technique capable of preventing the generation of excessive metallic vapor during fabrication according to an AM technique. Further, one of the objects of the present application is to provide a technique for reducing machining processing after the fabrication as much as possible or eliminating the necessity thereof.

According to one aspect, an AM apparatus configured to manufacture a fabrication object is provided. This AM apparatus includes a first DED nozzle configured to fabricate a contour of a fabrication target and a second DED nozzle configured to fabricate an inner portion of the contour.

## Description

### TECHNICAL FIELD

The present application relates to an AM apparatus. The present application claims priority under the Paris Convention to Japanese Patent Application No. 2019-160875 filed on September 4, 2019. The entire disclosure of Japanese Patent Application No. 2019-160875 including the specification, the claims, the drawings, and the abstract is incorporated herein by reference in its entirety.

### BACKGROUND ART

There are known techniques for directly fabricating a three-dimensional object based on three-dimensional data on a computer that expresses the three-dimensional object. Known examples thereof include the Additive Manufacturing (AM) technique. As one example thereof, Direct Energy Deposition (DED) is available as the AM technique using the deposition method. DED is a technique that carries out fabrication by melting and solidifying a metal material together with a base material using an appropriate heat source while supplying the metal material locally. Further, Powder Bed Fusion (PBF) is available as one example of the AM technique. In PBF, each layer of the three-dimensional object is fabricated by, toward metal powder two-dimensionally deposited all over a surface, irradiating a portion thereof to be fabricated with a laser beam or an electron beam serving as a heat source, and melting and solidifying or sintering the metal powder. In PBF, the desired three-dimensional object can be fabricated by repeating such a process.

### CITATION LIST

### PATENT LITERATURE

PTL 1: United States Patent No. 4724299
PTL 2: Japanese Patent Domestic Announcement No. 2019-500246

### SUMMARY OF INVENTION

### TECHNICAL PROBLEM

Generally, DED can achieve a higher fabrication speed when PBF and DED are compared. However, increasing the fabrication speed in DED easily leads to the occurrence of a local temperature rise to increase a heat input. As a result, the melted and solidified metal material is easily shaped differently from the intended shape with excessive metallic vapor generated and the metal material reduced, and an already fabricated portion may also be deformed due to the influence of the heat. Further, in the case of DED, the shape of the fabrication object easily varies, and therefore machining processing is often performed after the fabrication using DED. One of the objects of the present application is to provide a technique capable of preventing the generation of excessive metallic vapor and the occurrence of deformation during fabrication according to the AM technique. Further, one of the objects of the present application is to provide a technique for reducing machining processing after fabrication as much as possible or eliminating the necessity thereof.

### SOLUTION TO PROBLEM

According to one aspect, an AM apparatus configured to manufacture a fabrication object is provided. This AM apparatus includes a first DED nozzle configured to fabricate a contour of a fabrication target and a second DED nozzle configured to fabricate an inner region of the contour.

### BRIEF DESCRIPTION OF DRAWINGS

Fig. 1 schematically illustrates an AM apparatus for manufacturing a fabrication object according to one embodiment.
Fig. 2 schematically illustrates an AM apparatus for manufacturing a fabrication object according to one embodiment.
Fig. 3 schematically illustrates an AM apparatus for manufacturing a fabrication object according to one embodiment.
Fig. 4 schematically illustrates an AM apparatus including a cooling device according to one embodiment.
Fig. 5 schematically illustrates a DED head according to one embodiment.
Fig. 6 schematically illustrates a cross section of a DED nozzle according to one embodiment.

### DESCRIPTION OF EMBODIMENTS

In the following description, embodiments of an AM apparatus for manufacturing a fabrication object according to the present invention will be described with reference to the attached drawings. In the attached drawings, identical or similar components may be indicated by identical or similar reference numerals, and redundant descriptions regarding the identical or similar components may be omitted in the description of each of the embodiments. Further, features described in each of the embodiments are applicable even to other embodiments in so far as they do not contradict each other.

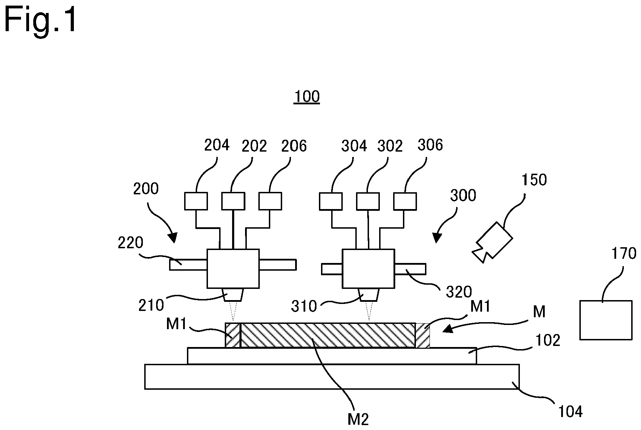

Fig. 1 schematically illustrates an AM apparatus for manufacturing a fabrication object according to one embodiment. As illustrated in Fig. 1, an AM apparatus 100 includes a base plate 102. A fabrication object M is supposed to be fabricated on the base plate 102. The base plate 102 can be a plate made from an arbitrary material capable of supporting the fabrication object M. The base plate 102 is disposed on an XY stage 104. The XY stage 104 is a stage 104 movable in two directions (an x direction and a y direction) perpendicular to each other in a horizontal plane. The XY stage 104 may be coupled with a lift mechanism movable in the height direction (a z direction).

In one embodiment, the AM apparatus 100 includes a first DED head 200 as illustrated in Fig. 1. The first DED head 200 is connected to a laser source 202, a material powder source 204, and a gas source 206. The first DED head 200 includes a DED nozzle 210. The first DED nozzle 210 is configured to inject laser, material powder, and gas from the laser source 202, the material powder source 204, and the gas source 206. The first DED head 200 can be an arbitrary DED head, and, for example, a known DED head can be used as it. The first DED head 200 is coupled with a movement mechanism 220, and is movably configured. The movement mechanism 220 may be an arbitrary movement mechanism, and, for example, may be a movement mechanism capable of moving the first DED head 200 along a specific axis such as a rail, or may be formed from a robot capable of moving the first DED head 200 to an arbitrary position and in an arbitrary direction. The first DED head 200 is used to form a contour of the fabrication object, as will be described below.

In one embodiment, the AM apparatus 100 includes a second DED head 300 as illustrated in Fig. 1. The second DED head 300 is connected to a laser source 302, a material powder source 304, and a gas source 306. Either the same sources as or different sources from the laser source 202, the material powder source 204, and the gas source 206 connected to the first DED head 200 may be used as the laser source 302, the material powder source 304, and the gas source 306 connected to the second DED head 300, respectively. The second DED head 300 includes a DED nozzle 310. The DED nozzle 310 is configured to inject laser, material powder, and gas from the laser source 302, the material powder source 304, and the gas source 306. The second DED head 300 can be an arbitrary DED head, and, for example, a known DED head can be used as it. The second DED head 300 is coupled with a movement mechanism 320, and is movably configured. The movement mechanism 320 may be an arbitrary movement mechanism, and, for example, may be a movement mechanism capable of moving the second DED head 300 along a specific axis such as a rail, or may be formed from a robot capable of moving the second DED head 300 to an arbitrary position and in an arbitrary direction. The second DED head 300 is used to fabricate an inner region of the contour of the fabrication object formed by the first DED head 200, as will be described below.

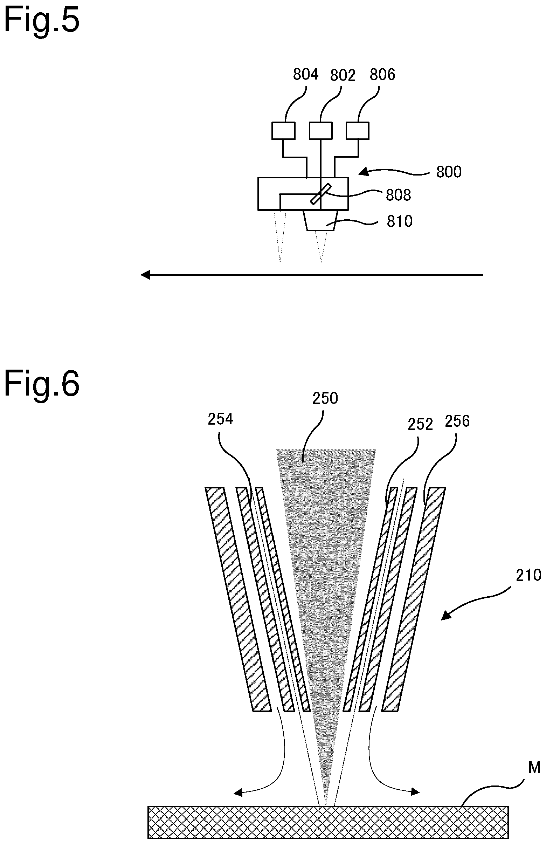

Fig. 6 schematically illustrates a cross section of the DED nozzle 210 according to one embodiment. The DED nozzle 210 according to the illustrated embodiment includes a first passage 252 at the center thereof. Laser 250 passes through the first passage 252. Further, the DED nozzle 210 includes a second passage 254 outside the first passage 252. The material powder and carrier gas for transporting the material powder pass through the second passage 254. Further, the DED nozzle 210 includes a third passage 256 outside the second passage 254. Shield gas passes through the third passage 256. The second passage 254 is configured in such a manner that the material powder discharged from the DED nozzle 210 is converged to substantially the same position as the focus position of the laser 250. The flow of the material powder and the carrier gas is indicated by a broken line in Fig. 6. The carrier gas can be inertial gas, such as argon gas and nitrogen gas. Using the inertial gas as the carrier gas allows a molten pool formed from the melted material powder to be covered with the inertial gas, thereby contributing to preventing oxidation thereof. However, the flow of the carrier gas may cause air outside it to be entangled therein. Therefore, the DED nozzle 210 illustrated in Fig. 6 supplies the shield gas at a low speed from the third passage 256 disposed outside the second passage 254 from which the powder material and the carrier gas are discharged, thereby being able to prevent surrounding air from being entangled therein. The formation of a metal oxide film can be prevented, and, further, a highly wettable molten pool can be formed by preventing the surrounding air (especially, oxygen) from being entangled by the carrier gas. The flow of the shield gas is indicated by an arrow in Fig. 6. Fig. 6 illustrates an embodiment of the DED nozzle 210 as one example, but a similar configuration may be employed for the DED nozzle 310.

In one embodiment, the AM apparatus 100 includes a thermometer 150 as illustrated in Fig. 1. In one embodiment, the thermometer 150 can be a temperature capable of measuring a surface temperature of the fabrication object in process of fabrication, and, can be, for example, a radiation thermometer.

In the embodiment illustrated in Fig. 1, the AM apparatus 100 includes a control device 170. The control device 170 is configured to control the operations of various kinds of operation mechanisms of the AM apparatus 100, such as the above-described first DED head 200, second DED head 300, and various kinds of operation mechanisms. The control device 170 can be formed by a general computer or a dedicated computer.

When a three-dimensional object is fabricated by the AM apparatus 100 according to the embodiment illustrated in Fig. 1, the procedure therefor is as outlined below. First, three-dimensional data of a fabrication target is input to the control device 170. The control device 170 generates slice data for the fabrication based on the input three-dimensional data of the fabrication object. Further, the control device 170 generates execution data including fabrication conditions and a recipe. The fabrication conditions and the recipe include, for example, beam conditions and layering conditions. The beam conditions include voltage conditions, laser outputs, and the like of the laser light sources 202 and 302, and the scanning conditions include a scanning pattern, a scanning route, a scanning speed, a scanning interval, and the like. Examples of the scanning pattern include a pattern when the beam scans in one direction, a pattern when the beam scans in reciprocating directions, a pattern when the beam scans zigzag, and a pattern when the beam moves transversely while drawing a small circle. The scanning route determines, for example, in what order the beam scans. The layering conditions include, for example, a material type, an average particle diameter of the powder material, a particle shape, a particle size distribution, a particle supply speed (a supply weight per unit time), and a carrier gas flow rate. A part of the above-described fabrication conditions and recipe may be generated and changed according to the input three-dimensional data of the fabrication object or may be determined in advance independently of the input three-dimensional data of the fabrication object.

A contour portion M1 of a first layer of the three-dimensional object is fabricated using the first DED head 200. When the contour portion M1 is fabricated, the fabrication is carried out under conditions that allow the contour to be correctly fabricated and conditions that do not lead to deformation of the fabricated portion. Desirably, the thickness of the contour portion M1 is set to such a thickness that the already fabricated contour portion M1 is prevented from being deformed when an inner portion M2 of the contour portion is fabricated in the next process.

After the contour portion M1 of the first layer can be fabricated, next, the inner region M2 in the fabricated contour portion M1 is fabricated using the second DED head 300. When the inner region M2 is fabricated, the contour portion M1 is already formed, and therefore the inner region M2 has a low risk of being deformed during the fabrication, thereby being able to be fabricated under conditions that achieve higher-speed fabrication than when the contour portion is fabricated.

After the first layer can be fabricated, a contour portion M1 and an inner portion M2 of a second layer are next fabricated and the fabrication is further repeated to fabricate a third layer and a fourth layer, by which the fabrication of the three-dimensional object is completed. Desirably, the AM apparatus 100 carries out the fabrication while monitoring the temperature of the fabricated portion using the thermometer 150 during the fabrication, especially during the fabrication of the contour portion M1. If the fabrication object M has a high temperature on the surface thereof, excessive metallic vapor is easily generated, and, further, the shape of the already fabricated portion may also be deformed due to the influence of the heat. Therefore, desirably, the AM apparatus 100 is configured to monitor the temperature of the fabricated portion and start the fabrication of the next layer after the temperature reaches a temperature that allows the lower layer to be sufficiently solidified. Further, the fabrication of the inner portion M2 may be started before the entire fabrication of the contour portion M1 is completed in each layer. The whole fabrication time can be shortened by starting the fabrication of the inner portion M2 after a part of the contour portion M1 can be fabricated and advancing the fabrication of the contour portion M1 and the fabrication of the inner portion M2 at the same time.

The AM apparatus 100 according to this embodiment fabricates the inner portion M2 of the contour portion M1 under further high-speed conditions after fabricating the contour portion M1 of the fabrication object under conditions that can achieve correct fabrication, thereby being able to shorten the whole fabrication time while correctly fabricating the shape of the fabrication object M.

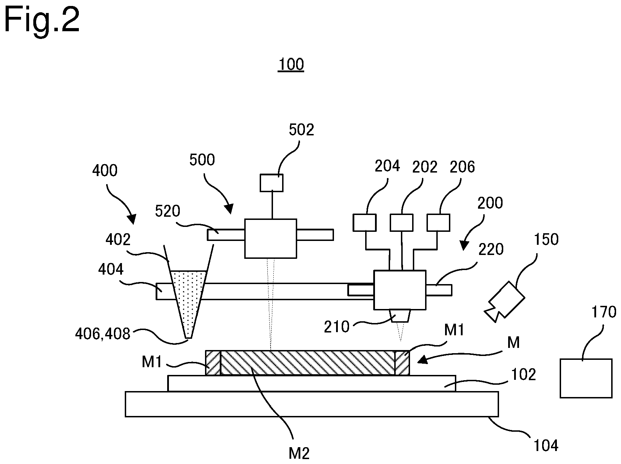

Fig. 2 schematically illustrates an AM apparatus for manufacturing a fabrication object according to one embodiment. The AM apparatus 100 illustrated in Fig. 2 includes the base plate 102 and the XY stage 104, and the fabrication object M is supposed to be fabricated on the base plate 102, similarly to the embodiment illustrated in Fig. 1.

In one embodiment, the AM apparatus 100 includes the first DED head 200 as illustrated in Fig. 2. The first DED head 200 illustrated in Fig. 2 can be configured similarly to the first DED head 200 illustrated in Fig. 1.

In the embodiment illustrated in Fig. 2, the AM apparatus 100 includes a material supply mechanism 400 for supplying the material of the fabrication object. The material supply mechanism 400 includes a storage container 402 for holding powder used as the material of the fabrication object, for example, metal powder, and a movement mechanism 404 for moving the storage container 402. The storage container 402 includes an opening 406 for discharging the material powder onto the base plate 102. The opening 406 can be, for example, a linear opening 406 longer than one side of the base plate 102. In this case, the material powder can be supplied to the entire surface of the base plate 102 by configuring the movement mechanism 404 so as to move in a range longer than the other side of the base plate 102 in a direction perpendicular to the line of the opening 406. Further, the storage container 402 includes a valve 408 for controlling the opening/closing of the opening 406. The material supply mechanism 400 may include a blade (not illustrated) for leveling out the material powder supplied from the storage container 402.

In one embodiment, the AM apparatus 100 includes a first beam irradiation head 500 as illustrated in Fig. 2. The first beam irradiation head 500 is connected to a laser source 502 or includes the laser 502 built therein. Further, the first beam irradiation head 500 can include an arbitrary optical system, and is configured to be able to condense the laser on a fabrication surface. The first beam irradiation head 500 is coupled with a movement mechanism 520, and is movably configured. The movement mechanism 520 may be an arbitrary movement mechanism, and, for example, may be a movement mechanism capable of moving the first beam irradiation head 500 along a specific axis such as a rail. Alternatively, the AM apparatus 100 may be configured to allow the laser from the first beam irradiation head 500 to scan on the fabrication surface using an arbitrary optical system such as a galvanometer mirror, instead of the movement mechanism 520 or in addition to the movement mechanism 520. Desirably, the laser emitted from the first beam irradiation head 500 is rectangularly condensed using an arbitrary beam shaper or the like, and exhibits a flat beam profile. The AM apparatus 100 can efficiently melt and sinter the powder material by including such a laser characteristic.

When the three-dimensional object is fabricated by the AM apparatus 100 according to the embodiment illustrated in Fig. 2, the procedure therefor is as outlined below. First, three-dimensional data of the fabrication target is input to the control device 170. The control device 170 generates slice data for the fabrication based on the input three-dimensional data of the fabrication object. Further, the control device 170 generates execution data including fabrication conditions and a recipe. The fabrication conditions and the recipe include, for example, beam conditions and layering conditions. The beam conditions include voltage conditions, laser outputs, and the like of the laser light sources 202 and 502, and the scanning conditions include a scanning pattern, a scanning route, a scanning speed, a scanning interval, and the like. Examples of the scanning pattern include a pattern when the beam scans in one direction, a pattern when the beam scans in reciprocating directions, a pattern when the beam scans zigzag, and a pattern when the beam moves transversely while drawing a small circle. The scanning route determines, for example, in what order the beam scans. The layering conditions include, for example, a material type, an average particle diameter of the powder material, a particle shape, a particle size distribution, a particle supply speed (a supply weight per unit time), and a carrier gas flow rate. A part of the above-described fabrication conditions and recipe may be generated and changed according to the input three-dimensional data of the fabrication object or may be determined in advance independently of the input three-dimensional data of the fabrication object.

The contour portion M1 of the first layer of the three-dimensional object is fabricated using the first DED head 200. When the contour portion M1 is fabricated, the fabrication is carried out under conditions that allow the contour to be correctly fabricated and conditions that do not lead to deformation of the fabricated portion. Desirably, the thickness of the contour portion M1 is set to such a thickness that the already fabricated contour portion M1 is prevented from being deformed when the inner portion M2 of the contour portion M1 is fabricated in the next process.

After the contour portion M1 of the first layer can be fabricated, the powder material is supplied to the inner portion M2 of the fabricated contour portion M1 using the material supply mechanism 400. Next, the powder material of the inner portion M2 of the fabricated contour portion M1 is irradiated with the laser from the first beam irradiation head 500, and the powder material at a predetermined position is melted and sintered, by which the inner portion M2 of the contour portion M1 is fabricated. The inner portion M2 of the contour portion M1 of the first layer may be formed from a plurality of layers. In this case, the inner portion M2 of the contour portion M1 of the first layer can be formed by repeatedly lowering the base plate 102 by a distance corresponding to one layer, supplying a new powder material from the material supply mechanism 400, and irradiating the powder material with the laser every time each layer in the inner portion M2 is formed. Alternatively, the AM apparatus 100 may move the first beam irradiation head 500 upward by the distance corresponding to one layer every time each layer in the inner portion M2 is formed, instead of lowering the base plate 102.

After the first layer of the contour portion M1 and the inner portion M2 therein can be fabricated, the contour portion M1 and the inner portion M2 of the second layer are next fabricated and the fabrication is further repeated to fabricate the third layer and the fourth layer, by which the fabrication of the three-dimensional object is completed. Desirably, the AM apparatus carries out the fabrication while monitoring the temperature of the fabricated portion using the thermometer 150 during the fabrication, especially during the fabrication of the contour portion M1. If the fabrication object M has a high temperature on the surface thereof, metallic vapor is easily generated, and the supplied metal material may be reduced and/or the shape of the fabrication object M may be deformed due to the influence of the heat on the already fabricated portion. Therefore, desirably, the AM apparatus 100 is configured to monitor the temperature of the fabricated portion and start the fabrication of the next layer after the temperature reaches a temperature that allows the lower layer to be sufficiently solidified. Further, the fabrication of the inner portion M2 may be started before the entire fabrication of the contour portion M1 is completed in each layer. The whole fabrication time can be shortened by starting the fabrication of the inner portion M2 after a part of the contour portion M1 can be fabricated and advancing the fabrication of the contour portion M1 and the fabrication of the inner portion M2 at the same time.

In the embodiment illustrated in Fig. 2, the contour portion M1 of the fabrication object is fabricated by the DED method and the inner portion M2 is fabricated by the PBF method. In one embodiment, the AM apparatus 100 may be configured to further include the material supply mechanism 400 and the first beam irradiation head 500 illustrated in Fig. 2 in addition to the first DED head 200 and the second DED head 300 illustrated in Fig. 1.

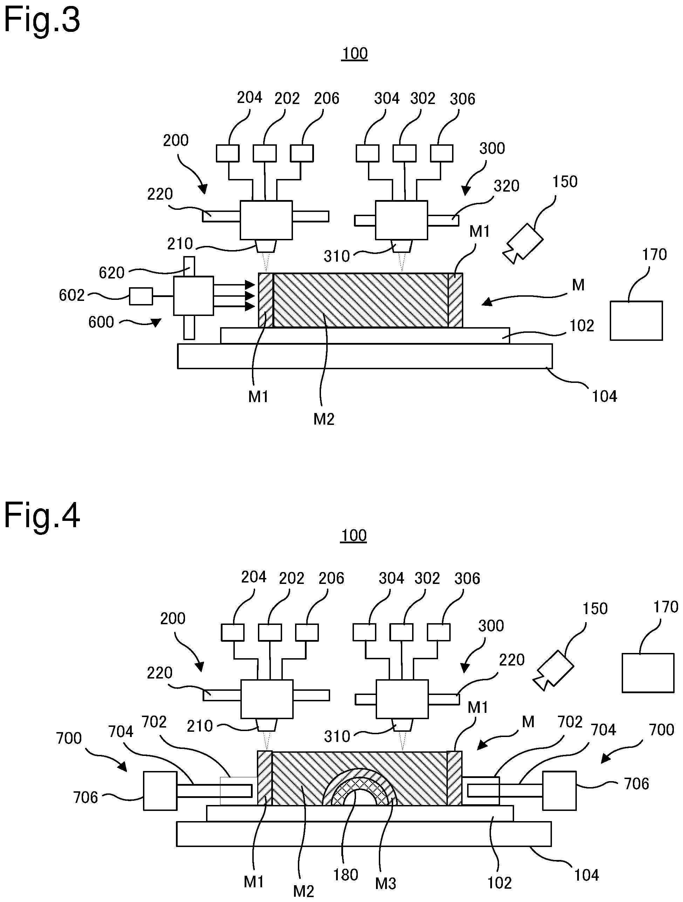

Fig. 3 schematically illustrates an AM apparatus for manufacturing a fabrication object according to one embodiment. In one embodiment, the AM apparatus 100 includes a second beam irradiation head 600 as illustrated in Fig. 3. The second beam irradiation head 600 is connected to a laser source 602 or includes the laser 602 built therein. The second beam irradiation head 600 is configured to be able to irradiate the surface of the formed fabrication object M with laser. The second beam irradiation head 600 is coupled with a movement mechanism 620, and is movably configured. The movement mechanism 620 may be an arbitrary movement mechanism, and, for example, may be a movement mechanism capable of moving the second beam irradiation head 600 along a specific axis such as a rail, or may be formed from a robot capable of moving the second beam irradiation head 600 to an arbitrary position and in an arbitrary direction. By irradiating the surface of the formed fabrication object M with the laser, the AM apparatus 100 can re-melt and resolidify the surface of the fabrication object M, thereby being able to, for example, resolve a step that may be formed when each layer is fabricated while being layered and reduce the surface roughness. Reducing the step and the roughness on the surface of the fabrication object M can lead to a reduction in the machining processing after the fabrication.

The AM apparatus 100 is illustrated as including the first DED head 200 and the second DED head 300 illustrated in Fig. 1 together with the second beam irradiation head 600 in Fig. 3, but may be configured to include the first DED head 200 and the first beam irradiation head 500 like the examples illustrated in Fig. 2 or may be configured to include the first DED head 200, the second DED head 300, and the first beam irradiation head 500. Further, the AM apparatus 100 may be configured to irradiate the surface of the fabrication object M with the beam using the second beam irradiation head 600 while fabricating another portion at the same time.

In one embodiment, the AM apparatus 100 includes a cooling device 700 for cooling the fabricated portion. Fig. 4 illustrates the AM apparatus 100 including the cooling device 700 according to one embodiment. The cooling device 700 includes a cooling member 702 disposed around the fabricated portion in contact therewith, and a cooling conduit 704 extending through inside the cooling member 702. The cooling conduit 704 is configured in such a manner that cooling medium fluid flows therein. The cooling conduit 704 is connected to a heat exchanger 706 for controlling the temperature of the cooling medium fluid.

In the fabrication according to the AM technique, the arbitrarily shaped three-dimensional object is fabricated by increasing the temperature of the metal powder to melt the metal powder and then solidifying it regardless of whether any of the DED and PBF methods is employed. In such an AM technique, the speed of the reduction in the temperature causes a change in the composition of the fabrication object, and affects the strength and the corrosion resistance of the fabrication object. Therefore, it is desirable to control the speed of the reduction in the temperature in the AM technique. The AM technique melts the material by irradiating it with the laser, and therefore tends to bring about a high-temperature environment as a whole. In the embodiment illustrated in Fig. 4, the AM apparatus 100 includes the cooling device 700, thereby becoming able to control the speed of the reduction in the temperature of the fabrication object M. For example, the AM apparatus 100 can control the temperature of the fabrication object and the speed of the reduction in the temperature by controlling the cooling device 700 while monitoring the temperature of the fabrication object M using the thermometer 150. The embodiment in Fig. 4 is illustrated as the AM apparatus 100 including the first DED head 200 and the second DED head 300, but may be the AM apparatus 100 that uses the first beam irradiation head 500 like the example illustrated in Fig. 2.

Further, Fig. 4 illustrates how a fabrication object including a bridge structure M3 is fabricated. When the bridge structure M3 is fabricated, the fabrication object may be fabricated by inserting a bridge plate 180 shaped in correspondence therewith. For example, with the bridge plate 180 disposed at a predetermined position, the contour portion M1 including the bridge structure M3 can be fabricated using the first DED head 200 as described above, and the inner portion M2 can be fabricated using the second DED head 200 or the first beam irradiation head 500 after that. In one embodiment, the bridge plate 180 may be configured to have the function of the cooling device 700. The bridge plate 180 can be configured to have the function of the cooling device 700 by, for example, providing the cooling conduit 704 to the bridge plate 180. Alternatively, a guide plate coupled with a movement mechanism such as a rail and a robot arm may be used instead of the bridge plate 180 disposed at the predetermined position. The melting and solidification can be supported by placing the guide plate in abutment with the underside or the side surface of the melted portion when the bridge structure M3 is fabricated. Further, the bridge plate 180 and the guide plate also have a function of reducing the surface roughness of the solidified surface.

Fig. 5 schematically illustrates a DED head according to one embodiment. A DED head 800 illustrated in Fig. 5 is connected to a laser source 802, a material powder source 804, and a gas source 806, similarly to the DED heads 200 and 300 illustrated in Fig. 1. The DED head 800 includes a DED nozzle 810. The DED nozzle 810 is configured to inject laser, material powder, and gas from the laser source 802, the material powder source 804, and the gas source 806. The DED head according to the embodiment illustrated in Fig. 5 is configured in such a manner that the laser light from the laser source 802 is divided by, for example, a half mirror 808 disposed in the DED head 800, and one of the divided light beams is emitted from the DED nozzle 810 and the other of the divided light beams is emitted from the front of the DED nozzle 810. The front of the DED nozzle 810 refers to the front in a traveling direction in which the DED head 800 moves at the time of fabrication (indicated by an arrow in Fig. 5). The laser emitted to the front is set to such an intensity that the surface to be fabricated (the lower layer) is not melted. The DED head 800 is configured in such a manner that the laser can be emitted to the front of the DED nozzle 810 by dividing the laser from the laser source 802 using the half mirror 808 in the embodiment illustrated in Fig. 5, but another laser source independent of the laser source 802 may be used as the laser emitted to the front of the DED nozzle 810.

When the fabrication is carried out using the DED head 800, the material can be layered at a predetermined position by irradiating the material powder with the laser while supplying the material powder from the DED nozzle 810 to the predetermined position. According to the DED head 800 illustrated in Fig. 5, the laser is emitted to the front in the traveling direction, and therefore the laser is emitted immediately before the material powder and the laser for the fabrication are supplied. As a result, the surface of the portion to be fabricated (the lower layer) is heated by the laser. Generally, a low temperature leads to low wettability. Therefore, the wettability of the surface of the portion to be fabricated (the lower layer) can be improved by preheating the surface of the portion to be fabricated (the lower layer) with the laser like the present embodiment. The improvement of the wettabiliy facilitates the retention of the melted material supplied from the DED nozzle 810 at the intended location, thereby contributing to achieving stable fabrication.

The characteristics of the DED head 800 illustrated in Fig. 5 can be employed in the AM apparatus 100 disclosed herein. For example, the DED head 800 illustrated in Fig. 5 may be used as the first DED head 200 and/or the second DED head 300 disclosed herein. Further, in the case of the AM apparatus 100 including the cooling device 700, like the embodiment illustrated in Fig. 4, stable fabrication can be achieved because only a small part of the surface to be fabricated is temporarily preheated with the laser and thus the wettability of the surface is improved while the already fabricated portion is appropriately cooled by the cooling device 700.

At least the following technical ideas can be recognized from the above-described embodiments.

[Configuration 1] According to a configuration 1, an AM apparatus for manufacturing a fabrication object is provided. This AM apparatus includes a first DED nozzle configured to fabricate a contour of a fabrication target, and a second DED nozzle configured to fabricate an inner of the contour.

[Configuration 2] According to a configuration 2, the AM apparatus according to the configuration 1 includes a supply device configured to supply a powder material to the inner portion of the contour, and a first beam irradiation head configured to irradiate the powder material disposed at the inner portion of the contour with a beam.

[Configuration 3] According to a configuration 3, the AM apparatus according to the configuration 1 or the configuration 2 includes a second beam head configured to irradiate a surface of the fabricated fabrication object with a beam.

[Configuration 4] According to a configuration 4, the AM apparatus according to any one of the configuration 1 to the configuration 3 includes a thermometer configured to measure a surface temperature of the fabrication object in process of the fabrication.

[Configuration 5] According to a configuration 5, the AM apparatus according to any one of the configuration 1 to the configuration 4 includes a base plate configured to support the fabrication target. The base plate is disposed on an XY stage movable in two directions perpendicular to each other in a horizontal plane.

[Configuration 6] According to a configuration 6, the AM apparatus according to any one of the configuration 1 to the configuration 5 includes a cooling device configured to cool a fabricated portion during the fabrication.

[Configuration 7] According to a configuration 7, an AM apparatus for manufacturing a fabrication object is provided. The AM apparatus includes a first DED nozzle configured to fabricate a contour of a fabrication target, a supply device configured to supply a powder material to an inner portion of the contour, and a first beam irradiation head configured to irradiate the powder material disposed at the inner portion of the contour with a beam.

[Configuration 8] According to a configuration 8, the AM apparatus according to the configuration 7 includes a second DED nozzle configured to fabricate the inner portion of the contour.

[Configuration 9] According to a configuration 9, the AM apparatus according to the configuration 7 or the configuration 8 includes a second beam head configured to irradiate a surface of the fabricated fabrication object with a beam.

[Configuration 10] According to a configuration 10, the AM apparatus according to any one of the configuration 7 to the configuration 9 includes a thermometer configured to measure a surface temperature of the fabrication object in process of the fabrication.

[Configuration 11] According to a configuration 11, the AM apparatus according to any one of the configuration 7 to the configuration 10 includes a base plate configured to support the fabrication target. The base plate is disposed on an XY stage movable in two directions perpendicular to each other in a horizontal plane.

[Configuration 12] According to a configuration 12, the AM apparatus according to any one of the configuration 7 to the configuration 11 includes a cooling device configured to cool a fabricated portion during the fabrication.

[Configuration 13] According to a configuration 13, a method for manufacturing a fabrication object according to an AM technique is provided. The method includes steps of fabricating a contour of a fabrication target by DED, and fabricating an inner portion of the contour.

[Configuration 14] According to a configuration 14, in the AM method according to the configuration 13, the step of fabricating the inner portion of the contour is performed by DED.

[Configuration 15] According to a configuration 15, in the method according to the configuration 13, the step of fabricating the inner portion of the contour is performed by PBF.

[Configuration 16] According to a configuration 16, the method according to any one of the configuration 13 to the configuration 15 includes a step of re-melting a surface of the fabricated fabrication object and re-solidifying it.

[Configuration 17] According to a configuration 17, the method according to any one of the configuration 13 to the configuration 16 includes a step of controlling a temperature of the fabrication object during the fabrication.

[Configuration 18] According to a configuration 18, in the method according to the configuration 17, the step of controlling the temperature of the fabrication object during the fabrication includes steps of measuring a surface temperature of the fabrication object during the fabrication, and cooling a fabricated portion during the fabrication.

### REFERENCE SIGNS LIST

- 100: AM apparatus
- 102: base plate
- 104: XY stage
- 150: thermometer
- 170: control device
- 200: first DED heat
- 210: DED nozzle
- 220: movement mechanism
- 300: second DED head
- 310: DED nozzle
- 320: movement mechanism
- 400: material supply mechanism
- 500: first beam irradiation head
- 600: second beam irradiation head
- 700: cooling device
- 800: DED head
- 810: DED nozzle
- M1: contour portion
- M2: inner portion
- M: fabrication object

## Claims

1. An AM apparatus for manufacturing a fabrication object, the AM apparatus comprising:
a first DED nozzle configured to fabricate a contour of a fabrication target; and
a second DED nozzle configured to fabricate an inner portion of the contour.

2. The AM apparatus according to claim 1, comprising:
a supply device configured to supply a powder material to the inner portion of the contour; and
a first beam irradiation head configured to irradiate the powder material disposed at the inner portion of the contour with a beam.

3. The AM apparatus according to claim 1 or 2, comprising a second beam head configured to irradiate a surface of the fabricated fabrication object with a beam.

4. The AM apparatus according to any one of claims 1 to 3, comprising a thermometer configured to measure a surface temperature of the fabrication object in process of the fabrication.

5. The AM apparatus according to any one of claims 1 to 4, comprising a base plate configured to support the fabrication target,
wherein the base plate is disposed on an XY stage movable in two directions perpendicular to each other in a horizontal plane.

6. The AM apparatus according to any one of claims 1 to 5, comprising a cooling device configured to cool a fabricated portion during the fabrication.

7. An AM apparatus for manufacturing a fabrication object, the AM apparatus comprising:
a first DED nozzle configured to fabricate a contour of a fabrication target;
a supply device configured to supply a powder material to an inner portion of the contour; and
a first beam irradiation head configured to irradiate the powder material disposed at the inner portion of the contour with a beam.

8. The AM apparatus according to claim 7, comprising a second DED nozzle configured to fabricate the inner portion of the contour.

9. The AM apparatus according to claim 7 or 8, comprising a second beam head configured to irradiate a surface of the fabricated fabrication object with a beam.

10. The AM apparatus according to any one of claims 7 to 9, comprising a thermometer configured to measure a surface temperature of the fabrication object in process of the fabrication.

11. The AM apparatus according to any one of claims 7 to 10, comprising a base plate configured to support the fabrication target,
wherein the base plate is disposed on an XY stage movable in two directions perpendicular to each other in a horizontal plane.

12. The AM apparatus according to any one of claims 7 to 11, comprising a cooling device configured to cool a fabricated portion during the fabrication.

13. A method for manufacturing a fabrication object according to an AM technique, the method comprising steps of:
fabricating a contour of a fabrication target by DED; and
fabricating an inner portion of the contour.

14. The method according to claim 13, wherein the step of fabricating the inner portion of the contour is performed by DED.

15. The method according to claim 13, wherein the step of fabricating the inner portion of the contour is performed by PBF.

16. The method according to any one of claims 13 to 15, comprising a step of re-melting a surface of the fabricated fabrication object and re-solidifying it.

17. The method according to any one of claims 13 to 16, comprising a step of controlling a temperature of the fabrication object during the fabrication.

18. The method according to claim 17, wherein the step of controlling the temperature of the fabrication object during the fabrication includes steps of
measuring a surface temperature of the fabrication object during the fabrication, and cooling a fabricated portion during the fabrication.
